# EUROPEAN PATENT SPECIFICATION

(11) **EP 2 749 911 B1**
(45) Date of publication and mention of the grant of the patent: **08.04.2020**
(21) Application number: 12199544.3
(22) Date of filing: 27.12.2012
(51) Int. Cl.: G01V 8/20, B60K 37/06, G06F 3/042

(54) **Object position detection apparatus for an automotive input device in a vehicle**
Objektpositionserkennungsvorrichtung für eine Automobil-Eingabevorrichtung in einem Fahrzeug
Appareil de détection de position d'objet pour un dispositif d'entrée automobile dans un véhicule

(43) Date of publication of application: 02.07.2014
(73) Proprietor: Alpine Electronics, Inc., Tokyo (JP)
(72) Inventor: Galos, Andreas, 70567 Stuttgart (DE)
(74) Representative: Schmitt-Nilson Schraud Waibel Wohlfrom Patentanwälte Partnerschaft mbB

(56) References cited:
- EP-A2- 1 854 656
- WO-A1-2011/131364
- US-A1- 2008 004 769
- US-A1- 2011 063 213
- US-A1- 2011 248 151

## Description

The present invention relates to an object position detection apparatus for an automotive input device in a vehicle, wherein the automotive input device is caused to perform a particular function upon detection of a position of an object to be detected. For example, the object to be detected is an object of a human for controlling a function of the automotive input device.

Object position detection apparatuses known in the art, for example, comprise proximity sensors which detect the approaching of an object to be detected, for example an object of a human such as a human's finger or hand approaching a graphical user interface (GUI) of an automotive input device. For example, when a user's hand approaches the GUI of the input device, such as a human machine interface (HMI) of a head unit in an automobile, a particular function of the head unit may be controlled. For example, when the user's hand is approaching the head unit, a display screen of the head unit may be switched to a particular appearance, such as a fade-in animation from a first display image to a final display image. In this field, there is typically the requirement that the function caused by the approaching of the user's finger or hand should correspond in motion and time period with the motion of the user's hand or finger towards the GUI, so that the user has an intuitive feeling in controlling the respective function. For example, if the user's motion is very fast towards the GUI, but the fade-in animation controlled by the user's motion takes a considerably longer time from the first display image to the final display image, the user may be confused about his or her controlling action. For instance, if a user's finger is coming towards the GUI from close distance or from a lateral direction, the time period of the fade-in animation may be too long in relation to the motion of the user's finger, so that the user may be confused by his or her own controlling motion and has to wait until he/she can operate the GUI.

In US 2010/0090982 A1 there is disclosed an information processing apparatus which includes sensor means for detecting a distance to a detection target spatially separated therefrom, storage means for storing information on boundary values of a plurality of layers to which different functions are respectively assigned, and which are set according to different distances, and determination means for determining in which one of the plurality of layers the detection target is positioned, from the boundary values of the plurality of layers in the storage means and an output signal of the sensor means. Control means execute a process about the function assigned to that layer where the detection target is positioned, based on a determination result from the determination means. For example, a human hand or finger is used as a detection target. The user can easily select a desired function by changing a layer where the user's hand or finger is positioned by spatially moving the hand or finger closer to or away from the sensor means. The sensor means are implemented to detect if the finger has moved closer to or away from the panel by detecting a change in capacitance corresponding to a distance.

In JP 2010-276525 A there is disclosed an information processing apparatus and object detection method comprising a proximity sensor which is constituted of one set of a light emitting element and a light receiving element. A regulator controls a voltage value of driving power supplied to the light emitting element based on a control signal. A light emission quantity from the light emitting element is switched into multi-stages by time division in a prescribed period via the regulator, and a light receiving state of reflected light by the light receiving element in the prescribed period is detected by monitoring a detection signal output from the light receiving element synchronously with switching, and the object distance is detected in multi-stages in addition to presence/absence of the object based on a detection result. Such information processing apparatus can detect an object distance in addition to presence/absence of the object.

EP 1 854 656 A2 discloses an in-vehicle apparatus (such as a car navigation system or a car audio) equipped with multiple detectors mounted around the operation portion to make it possible to detect from which direction a hand has approached the operation portion. If the positional relationship between passengers in the vehicle is previously known, it can be discerned from the detected direction as to whether the operator is the driver or a fellow passenger. At the same time, the multiple detectors arranged around the operation portion can also be used as detectors for simple operations utilizing hand waving that can be performed by the driver during driving.

It is an object of the present invention to provide an object position detection apparatus for an automotive input device which is capable of providing improved user operability, particularly which may distinguish an object approaching direction or location of the object and control a function of the input device accordingly.

The invention relates to an object position detection apparatus according to the independent claims.

In an aspect of the present invention, there is provided an object position detection apparatus for an automotive input device in a vehicle according to claim 1.

Accordingly, an object position detection apparatus according to the invention provides improved user operability, as the object position detection apparatus can control the automotive input device and different functions thereof depending on the object's approaching direction and/or location. For example, if a user's finger or hand is approaching the object position detection apparatus from the front, as it is usual in the normal operation case, radiation reflected by the user's finger or hand is received originating from a higher number of the radiation emitting elements than in a case in which the user's finger or hand is coming from a lateral direction. In this case, typically radiation reflected by the user's finger or hand is received only from a lower number of radiation emitting elements since the user's finger or hand is closer or only in lateral areas of the object position detection apparatus, so that the object only reflects radiation of a portion of the radiation emitting elements.

For example, if a user's finger is coming from the front, as in a normal case, an intuitive animation of the automotive input device, which may comprise, e.g., a display screen, may be performed which is easy to understand. On the other hand, if the user's finger is coming from the side or is near to the automotive input device, as in a more exceptional case, a quick switch-on function, quick access to GUI elements or similar may be performed.

According to an embodiment of the invention the radiation emitting elements are controlled to emit radiation sequentially. For example, multiple radiation emitting elements sequentially illuminate a detection area, wherein upon radiation which is reflected from a user's finger or hand in a detection area can be distinguished upon the time the respective radiation is received in order to determine a respective origin of the detected radiation.

According to a further embodiment, the radiation emitting elements are arranged extending along a line or are arranged in a two- or three-dimensional array. In principle, any appropriate arrangement of the radiation emitting elements may be provided depending on the particular application.

For example, the radiation receiving device comprises multiple radiation receiving elements. For example, the radiation receiving device comprises at least one photo diode. According to another embodiment, the radiation emitting elements may each comprise at least one light emitting device, commonly referred to as LED.

In an exemplary implementation, the detection processing device determines a position of the object to be detected depending on the radiation emitting element the radiation of which is received. In this way, it may be distinguished whether the object approaches the object position detection apparatus from a left or right direction.

According to another aspect of the invention there is provided an object position detection apparatus for an automotive input device in a vehicle according to claim 8.

According to the second aspect, the same basic functionality can be achieved as described above with respect to the first aspect. For example, if a user's finger or hand is coming from the front, radiation reflected by the user's finger or hand is typically received by a higher number of radiation receiving elements than in a case in which the user's finger or hand is coming from the side in which reflected radiation is received only by a lower number of the radiation receiving elements.

For example, the radiation emitting device comprises multiple radiation emitting elements, such as multiple LEDs. According to another embodiment, the radiation receiving elements each comprise at least one photo diode. Analogously as with the first aspect, the radiation receiving elements may be controlled to receive radiation sequentially.

According to an embodiment which may equally be implemented with both aspects, the object to be detected is an object of a human, such as a user's finger or hand, or an object controlled by a human, such as a stick which is held by the user's hand.

The automotive input device comprises a display unit, particularly a touch screen. The first object position detection signal causes the display unit to perform as first function a transition mode from a first display image to a second display image, and the second object position detection signal causes the display unit to perform as second function a single-step transition from a first display image to a second display image.

The object position detection apparatus of the invention may advantageously be arranged in or adjacent to a head unit of the vehicle which comprises the automotive input device.

Further advantages and aspects of the invention will be described with reference to the following Figures, in which:
- Fig. 1: shows an embodiment of an object position detection apparatus according to the invention,
- Fig. 2: shows another embodiment of an object position detection apparatus,
- Fig. 3: shows a further embodiment of an object position detection apparatus,
- Fig. 4: shows a particular implementation of an object position detection apparatus according to an embodiment of the invention providing a plurality of detection areas,
- Fig. 5: shows another exemplary implementation of an object position detection apparatus according to the invention providing a plurality of the detection areas,
- Fig. 6: shows a setup variant of an object position detection apparatus according to an embodiment of the invention,
- Fig. 7: shows an exemplary application of an object position detection apparatus according to an embodiment of the invention.

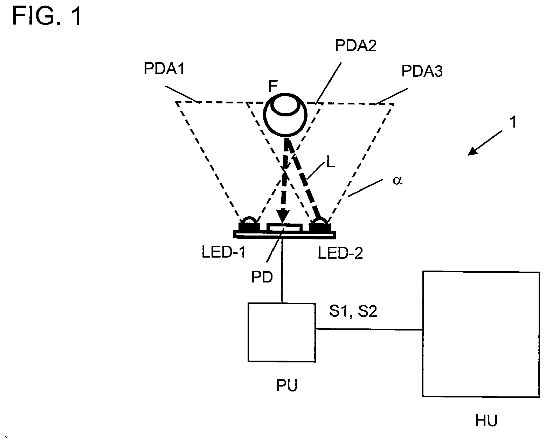

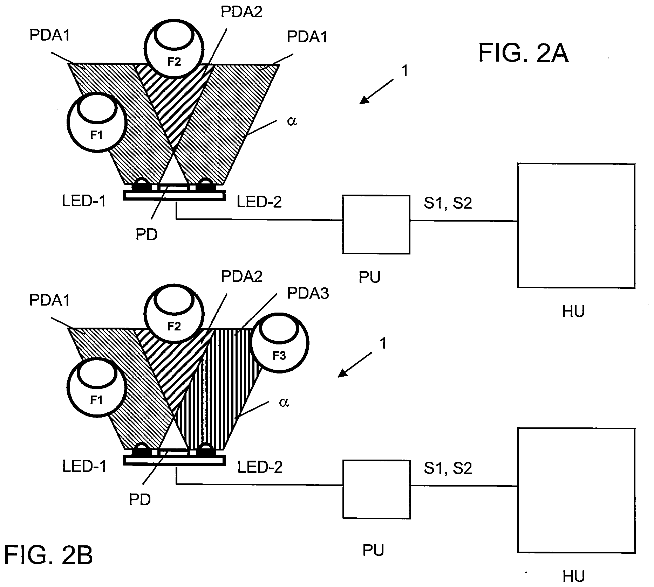

According to Fig. 1 and Figs. 2A, 2B, an embodiment of an object position detection apparatus according to a first aspect of the invention is shown. The object position detection apparatus 1 according to Figs. 1 and 2 comprises two radiation emitting elements, which are implemented in the present example as light emitting devices (LEDs). A first light emitting device LED-1 emits light with an opening angle α in order to span a position detection area as shown in Fig. 1 by the dashed lines. A second light emitting device LED-2 emits light at an opening angle α to span another position detection area as shown by the dashed lines. The radiation receiving device, which is implemented in the present example as a photo diode PD, is arranged to receive the radiation (illustrated herein as light beam L) emitted from the LED-1, LED-2 which is reflected from an object to be detected, which is a user's finger (such as F, F1, F2, F3) in the present case. For example, if a user's finger has a position as shown with finger F1 radiation emitted from LED-1 is reflected by finger F1, wherein the reflected light is received by photo diode PD. If the user's finger is at a position as shown in Fig. 2 with finger F2, light emitted from both LED-1, LED-2 is reflected by finger F2, wherein the reflected light is received by photo diode PD. In this way, with LED-1 and LED-2 two position detection areas PDA1 and PDA2 may be defined. A first position detection area PDA1 may be defined if light is received originating from only one of the LED-1, LED-2, thus defining a lateral position detection area (Fig. 2A). That is, if light is received by photo diode PD originating from only one of the LEDs, it may be determined that the user's finger (such as F1) is in position detection area PDA1 (Fig. 2A). If, on the other hand, light is received by photo diode PD originating from both LED-1 and LED-2, it may be determined that the user's finger is in position detection area PDA2 (such as shown with finger F2) since light from both LEDs is reflected by the user's finger, so that it may be determined that the finger is within PDA2.

A detection processing device PU is coupled to the photo diode PD. The detection processing device PU generates a first object position detection signal S1 if light is received originating from both LEDs and generates a second object position detection signal S2 if light is received originating from only one of the LEDs. In a particular implementation, the detection processing device PU may be coupled with an automotive input device. For example, the automotive input device may be comprised in a head unit HU of a vehicle.

According to Fig. 2B, with LED-1 and LED-2 three different position detection areas PDA1, PDA2 and PDA3 may be spanned and defined. For example, if light is received by photo diode PD originating only from LED-1, it may be determined that the finger (here F1) is in position detection area PDA1. If, on the other hand, light is received by photo diode PD originating only from LED-2, it may be determined that the finger (F3) is in position detection area PDA3. In this embodiment, the detection processing device PU determines the position of the finger F1, F3 depending on whether light has been received originating from LED-1 or LED-2. If light is received by photo diode PD originating from both LED-1 and LED-2, it may be determined that the user's finger (F2) is in position detection area PDA2. Similar as in the embodiment according to Fig. 2A, if the finger is determined to be in PDA2, the object position detection signal S1 may be generated and transmitted to the head unit HU, whereas if the user's finger is detected to be in PDA1 or PDA3, the object position detection signal S2 may be generated.

According to Fig. 1 or Fig. 2A, 2B, an exemplary basic working principle of the object position detection apparatus 1 may be as follows. The LED-1 and LED-2 may emit light sequentially, e.g. in a pattern like 1-2-1-2-1- .... The photo diode PD receives reflected light continuously. Software logic in the detection processing device PU can determine the object position, such as the position of the user's finger F, based on the time when a reflection is received: If reflection is received when only LED-1 or LED-2 is active, but not at both times, it may be determined that the object is in an edge are, such as PDA1 or PDA3. If reflection is received at times when LED-1 and LED-2 are active, it may be determined that the object is in a center area such as PDA2.

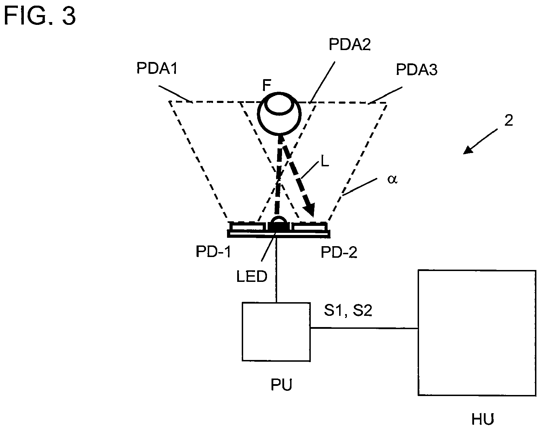

In Fig. 3, there is shown another embodiment of an object position detection apparatus according to a second aspect of the present invention. In its basic function, the apparatus as shown in Fig. 3 is complementary to the apparatus as shown according to Fig. 1. The object position detection apparatus 2 according to Fig. 3 comprises at least one radiation emitting device, which is implemented in the present example as a light emitting device LED, and further comprises two radiation receiving elements, which are implemented in the present example as photo diodes PD-1, PD-2. The radiation receiving elements PD-1, PD-2 receive light with an opening angle α, which may be adjusted, for instance, by respective optics and/or the housing of the elements as commonly known. They are arranged in a way to receive radiation (such as a light beam L as illustrated in Fig. 3) emitted from the LED which is reflected from an object to be detected, for example a finger F of the user.

Like the LED-1, LED-2 according to Figs. 1 and 2, the photo diodes PD-1, PD-2 may span and define different position detection areas PDA1, PDA2 and PDA3 for detecting a position of the object to be detected. If an object, like the user's finger F, is present in position detection area PDA1, light is received by photo diode PD-1 only, and if the object is present in position detection area PDA3, light is received by photo diode PD-2 only. On the other hand, if light is received by both photo diodes PD-1, PD-2, it may be determined that the object is present in position detection area PDA2, as shown in Fig. 3. If the object is in PDA1 or PDA3, the detection processing device PU coupled to the photo diodes PD-1, PD-2 generates a first object position detection signal S1, whereas the detection processing device PU generates a second object position detection signal S2 if light is received by only PD-1 or PD-2, i.e. the object is within PDA1 or PDA3. The detection signals SI, S2 may control an automotive input device, such as a head unit HU of an automobile, in the same way as described above with reference to Figs. 1 and 2.

For example, the LED according to Fig. 3 is sending light continuously, whereas the photo diodes PD-1, PD-2 are receiving reflected light sequentially. Software logic in the detection processing device PU can determine an object position based on the time when a reflection is received: If reflection is received when only PD-1 or PD-2 is active, but not both, it may be determined that the detected object F is in an edge area, such as PDA1, PDA3. If reflection is received when both PD-1 and PD-2 are active, it may be determined that the detected object is in a center area, such as PDA2 as shown in Fig. 3.

According to another setup variant, the LED is sending light continuously, whereas PD-1 and PD-2 are receiving light also continuously. Software logic in the detection processing device PU can determine an object position based on which photo diode is receiving a reflection: If reflection is received by only PD-1 or PD-2, but not both, it may be determined that the object is in an edge area such as PDA1 or PDA3. If reflection of light from LED is received by both PD-1 and PD-2, it may be determined that the object is in the center area, such as PDA2 as shown in Fig. 3.

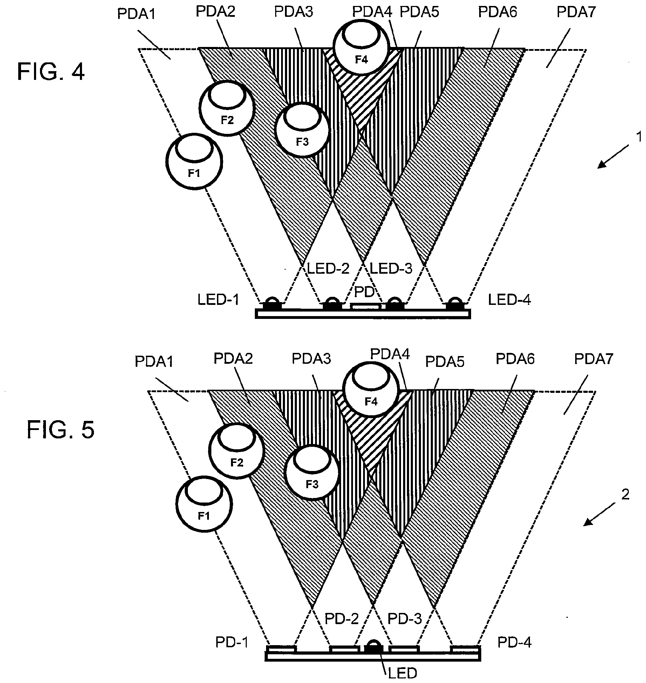

In Figs. 4 and 5, possible implementations of an object position detection apparatus 1, 2 according to the first and second aspects are shown in which more than two radiation emitting elements LED-1 - LED-4 and more than two radiation receiving elements PD-1 - PD-4, respectively, are used. The embodiment according to Fig. 4 is a variant of the embodiment according to Fig. 1, whereas the embodiment according to Fig. 5 is a variant of the embodiment according to Fig. 3.

In the embodiment according to Fig. 4, the light emitting devices LED-1 - LED-4 are used as differentiating components which span, in combination, multiple position detection areas as shown. For example, if light is received by photo diode PD originating from only one LED, such as LED-1 or LED-4, it may be determined that the object is within position detection area PDA1 (such as depicted with object F1) or PDA7. In analogous manner, position detection area PDA2 and PDA6 defines an area in which light is reflected by an object originating from at least two LEDs. Within position detection area PDA3 and PDA5, an object to be detected reflects light originating from at least three LEDs, and position detection area PDA4 defines an area, within which an object reflects light originating from all four LEDs. The further position detection areas PDA5, PDA6 and PDA7 correspond to PDA3, PDA2 and PDA1, respectively. As in the example of Fig. 2A, PDA3 and PDA5 may be combined to one position detection area, PDA2 and PDA6 may be combined to a common position detection area and PDA1, PDA7 may be combined to a common position detection area.

The principle as explained with reference to Fig. 4 for an object position detection apparatus 1 according to the first aspect may be applied in analogous manner to an object position detection apparatus 2 according to the second aspect, which is illustrated in Fig. 5. Like the LED-1 to LED-4 according to Fig. 4, the radiation receiving elements PD-1 to PD-4 as respective differentiating component may span different position detection areas PDA1 to PDA7. For example, if light from the LED is received by only PD-1 or PD-4, it may be determined that an object, such as F1, is within position detection area PDA1 or PDA7, respectively. If, for example, light emitted from LED is received by all photo diodes PD-1 to PD-4, it may be determined that the object (such as F4) is within position detection area PDA4.

The basic concept as explained with reference to Figs. 4 and 5 can be extended by lining up several radiation emitting elements (LEDs) or several radiation receiving elements (photo diodes) as the respective differentiating components. In this way, an object such as a user's finger can be determined to be in several zones, depending on the respective detected reflection.

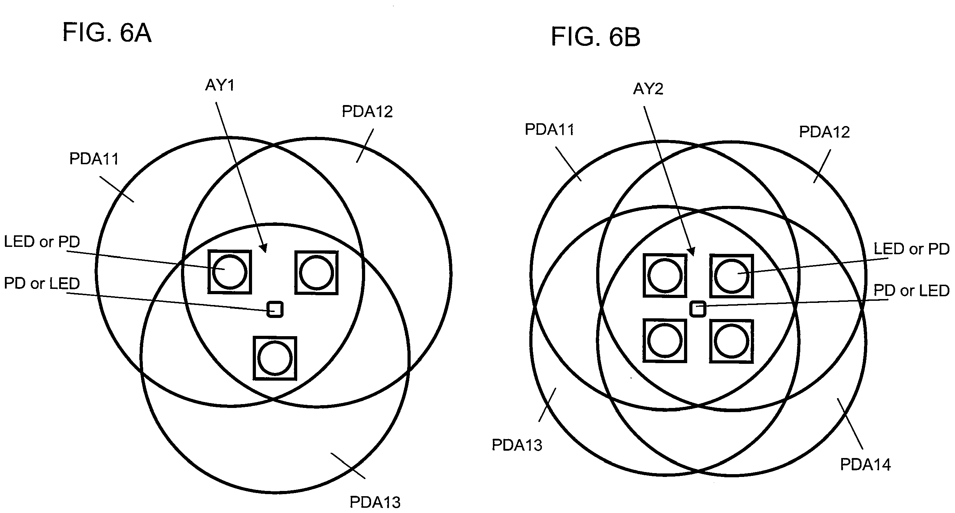

Fig. 6 shows two embodiments of an object position detection apparatus in which radiation emitting elements or radiation receiving elements are arranged in two- or three-dimensional arrays. According to Fig. 6A, radiation emitting elements LED or radiation receiving elements PD may be arranged in a two-dimensional array AY1 to define respective position detection areas PDA11, PDA12, PDA13, as shown. In the center of this arrangement, for example, a radiation receiving element (in case of an array of radiation emitting elements) or a radiation emitting element (in case of an array of radiation receiving elements) may be arranged according to the principles as explained with reference to Figs. 1 and 3.

In the example according to Fig. 6A, three components LED or PD as differentiating components are used, whereas according to Fig. 6B four LEDs or PDs are used as the differentiating components in a rectangular arrangement as shown. In this way, four different position detection areas PDA11-PDA 14 may be defined. The basic concept as shown in Fig. 6 may be extended in principle to any array of several LEDs or PDs in a two-dimensional array (as shown in Fig. 6) or in even three-dimensional array with further differentiating components in depth-direction. In this way, an object such as the user's finger can be determined to be in several zones, depending on the reflection. As explained above, this variant can again be built up using LEDs or PDs as the differentiating component.

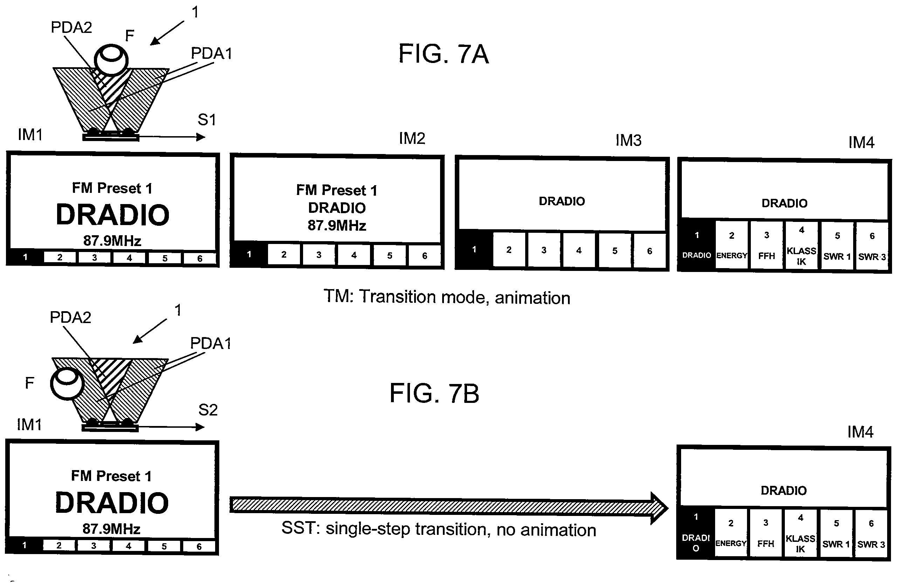

In Fig. 7, a possible implementation of an object position detection apparatus in an application of an automotive input device is illustrated. In this example, an object position detection apparatus 1 according to the first aspect with LEDs as differentiating component is used, but the principle may also be applied analogously in connection with an object position detection apparatus 2 according to the second aspect. In the example of Fig. 7, the object position detection apparatus 1 is arranged in or adjacent to the automotive input device which may be comprised in a head unit HU of a vehicle. The automotive input device of the head unit HU comprises a display unit, such as a touch screen, for displaying display images for implementing GUI. For example, in a default mode the display unit displays an image IM1 indicating the particular radio broadcasting channel which is presently active on the head unit HU.

If according to Fig. 7A a user's finger is detected to be within position detection area PDA2 (i.e., light is reflected by the finger F and detected by PD originating from both LEDs), the first object position detection signal S1 is output by the detection processing device PU causing the display unit to perform a transition mode TM as a first function from a first display image IM1 to a second display image IM4. In this animated transition mode TM, the letters of the broadcasting channel are getting smaller from image to image, whereas the station buttons for the different broadcasting channels, which may be selected by touching, are becoming bigger until displaying the respective broadcasting channels in image IM4 by name. The user benefit in this case is that the GUI transition is intuitive and easy to understand if the user's finger F is detected in the normal/long distance area PDA2.

On the other hand, if the user's finger appears in short distance or from the lateral edge, such that the finger F is detected to be within position detection area PDA1 (Fig. 7B), the detection processing device PU outputs a second object position detection signal S2 causing the display unit of the head unit HU to perform a single-step transition SST from a first display image IM1 to a second display image IM4 as a second function. In this single-step transition mode the display unit switches immediately from image IM1 to the image IM4 without transition with multiple images inbetween and without animation. This is illustrated in Fig. 7B with the head unit HU switching immediately from image IM1 to image IM4. The user's benefit in this case is that the GUI transition is quick and easy to operate similar to the user's motion in case the user's finger is appearing in short distance or from the side (in the example of Fig. 7B within position detection area PDA1) with respect to the head unit.

Embodiments of the present invention have been explained in which light emitting elements are used as radiation emitting elements and light receiving elements are used as radiation receiving elements. However, any kind of radiation emitting elements and radiation receiving elements may be used for emitting and receiving radiation in any spectrum suitable for the purpose of the present invention. Preferably, however, LEDs and corresponding photo diodes are used which may be implemented with low cost which may preferably be operated in the non-visible spectrum (such as UV-light). Furthermore, radiation emitting elements may be used which may be distinguished by their radiation which they respectively emit as an alternative to sending out the radiation sequentially, as explained above.

## Claims

1. An arrangement of an object position detection apparatus (1) coupled with an automotive input device (HU) having a display unit in a vehicle, comprising
- at least two radiation emitting elements (LED-1, LED-2) and at least one radiation receiving device (PD),
- wherein the at least one radiation receiving device (PD) is arranged to receive radiation (L) emitted from the at least two radiation emitting elements (LED-1, LED-2) which is reflected from an object (F) to be detected,
- a detection processing device (PU) which is coupled to the at least one radiation receiving device (PD), wherein the detection processing device is adapted to generate a first object position detection signal (S1) if radiation is received originating from a first number of the radiation emitting elements (LED-1, LED-2), and is adapted to generate a second object position detection signal (S2) if radiation is received originating from a second number of the radiation emitting elements (LED-1, LED-2) which is lower than the first number of radiation emitting elements,
**characterized in that** the detection processing device (PU) is coupled with the automotive input device (HU), wherein the first object position detection signal (S1) is adapted to cause the automotive input device (HU) to perform a first function (TM) and the second object position detection signal (S2) is adapted to cause the automotive input device (HU) to perform a second function (SST), with the first object position detection signal (S1) causing the display unit to perform as first function a transition mode (TM) from a first display image (IM1) to a second display image (IM4) with a transition with multiple images inbetween, and the second object position detection signal (S2) causing the display unit to perform as second function in a single-step transition mode a single-step transition (SST) from a first display image (IM1) to a second display image (IM4) without transition with multiple images inbetween.

2. The object position detection apparatus according to claim 1, wherein the at least two radiation emitting elements (LED-1, LED-2) are controlled to emit radiation sequentially.

3. The object position detection apparatus according to one of claims 1 or 2, wherein the at least two radiation emitting elements (LED-1, LED-2) are arranged extending along a line or are arranged in a two- or three-dimensional array (AY1, AY2).

4. The object position detection apparatus according to one of claims 1 to 3, wherein the at least one radiation receiving device (PD) comprises multiple radiation receiving elements.

5. The object position detection apparatus according to one of claims 1 to 4, wherein the at least two radiation emitting elements each comprise at least one light emitting device (LED-1, LED-2).

6. The object position detection apparatus according to one of claims 1 to 5, wherein the at least one radiation receiving device comprises at least one photodiode (PD).

7. The object position detection apparatus according to one of claims 1 to 6, wherein the detection processing device (PU) determines a position of the object (F) to be detected depending on the radiation emitting element (LED-1, LED-2) the radiation of which is received.

8. An arrangement of an object position detection apparatus (2) coupled with an automotive input device (HU) having a display unit in a vehicle, comprising
- at least one radiation emitting device (LED) and at least two radiation receiving elements (PD-1, PD-2),
- wherein the at least two radiation receiving elements (PD-1, PD-2) are arranged to receive radiation (L) emitted from the at least one radiation emitting device (LED) which is reflected from an object (F) to be detected,
- a detection processing device (PU) which is coupled to the at least two radiation receiving elements (PD-1, PD-2), wherein the detection processing device (PU) is adapted to generate a first object position detection signal (S1) if radiation from the at least one radiation emitting device (LED) is received by a first number of the radiation receiving elements (PD-1, PD-2), and is adapted to generate a second object position detection signal (S2) if radiation from the at least one radiation emitting device (LED) is received by a second number of the radiation receiving elements (PD-1, PD-2) which is lower than the first number of radiation receiving elements,
**characterized in that** the detection processing device (PU) is coupled with the automotive input device (HU), wherein the first object position detection signal (S1) is adapted to cause the automotive input device (HU) to perform a first function (TM) and the second object position detection signal (S2) is adapted to cause the automotive input device (HU) to perform a second function (SST), with the first object position detection signal (S1) causing the display unit to perform as first function a transition mode (TM) from a first display image (IM1) to a second display image (IM4) with a transition with multiple images inbetween, and the second object position detection signal (S2) causing the display unit to perform as second function in a single-step transition mode a single-step transition (SST) from a first display image (IM1) to a second display image (IM4) without transition with multiple images inbetween.

9. The object position detection apparatus according to claim 8, wherein the at least one radiation emitting device (LED) comprises multiple radiation emitting elements.

10. The object position detection apparatus according to claim 8 or 9, wherein the at least two radiation receiving elements each comprise at least one photo diode (PD-1, PD-2).

11. The object position detection apparatus according to one of claims 8 to 10, wherein the at least two radiation receiving elements (PD-1, PD-2) are controlled to receive radiation sequentially.

12. The object position detection apparatus according to one of claims 1 to 11, wherein the object (F) to be detected is an object of a human or an object controlled by a human.

13. The object position detection apparatus according to one of claims 1 to 12, wherein the object position detection apparatus (1, 2) is arranged in or adjacent to a head unit (HU) of the vehicle which comprises the automotive input device.

## Patentansprüche

1. Anordnung einer Objektpositions-Detektionsvorrichtung (1) gekoppelt mit ei - ner Kraftfahrzeug-Eingabevorrichtung (HU) mit einer Anzeigeeinheit in ei - nem Fahrzeug, aufweisend
- mindestens zwei Strahlung emittierende Elemente (LED-1, LED-2) und mindestens eine Strahlung empfangende Vorrichtung (PD),
- wobei die mindestens eine Strahlung empfangende Vorrichtung (PD) zum Empfangen von Strahlung (L) ausgebildet ist, die von den mindestens zwei Strahlung emittierenden Elementen (LED-1, LED-2) emittiert wird und von einem zu detektierenden Objekt (F) reflektiert wird,
- eine Detektionsverarbeitungsvorrichtung (PU), die mit der mindestens einen Strahlung empfangenden Vorrichtung (PD) gekoppelt ist, wobei die Detektionsverarbeitungsvorrichtung dazu ausgebildet ist, ein erstes Objekt - positions-Detektionssignal (S1) zu erzeugen, wenn Strahlung empfangen wird, die von einer ersten Anzahl der Strahlung emittierenden Elemente (LED-1, LED-2) stammt, sowie dazu ausgebildet ist, ein zweites Objektposi - tions-Detektionssignal (S2) zu erzeugen, wenn Strahlung empfangen wird, die von einer zweiten Anzahl der Strahlung emittierenden Elemente (LED-1, LED-2) stammt, die geringer ist als die erste Anzahl der Strahlung emittie - renden Elemente,
**dadurch gekennzeichnet, dass** die Detektionsverarbeitungsvorrichtung (PU) mit der Kraftfahrzeug-Eingabevorrichtung (HU) gekoppelt ist, wobei das ers - te Objektpositions-Detektionssignal (S1) dazu ausgebildet ist, die Kraftfahr - zeug-Eingabevorrichtung (HU) zum Ausführen einer ersten Funktion (TM) zu veranlassen, und das zweite Objektpositions-Detektionssignal (S2) dazu ausgebildet ist, die Kraftfahrzeug-Eingabevorrichtung (HU) zum Ausführen einer zweiten Funktion (SST) zu veranlassen, wobei das erste Objektpositi - ons-Detektionssignal (S1) die Anzeigeeinheit dazu veranlasst, als erste Funktion einen Übergangsmodus (TM) von einem ersten Anzeigebild (IM1) zu einem zweiten Anzeigebild (IM4) mit einem Übergang mit mehreren Bil - dern dazwischen auszuführen, und wobei das zweite Objektpositions-Detektionssignal (S2) die Anzeigeeinheit dazu veranlasst, als zweite Funkti - on in einem einstufigen Übergangsmodus einen einstufigen Übergang (SST) von einem ersten Anzeigebild (IM1) zu einem zweiten Anzeigebild (IM4) ohne Übergang mit mehreren Bildern dazwischen auszuführen.

2. Objektpositions-Detektionsvorrichtung nach Anspruch 1,
wobei die mindestens zwei Strahlung emittierenden Elemente (LED-1, LED-2) derart gesteuert werden, dass sie Strahlung nacheinander emittieren.

3. Objektpositions-Detektionsvorrichtung nach einem der Ansprüche 1 oder 2, wobei die mindestens zwei Strahlung emittierenden Elemente (LED-1, LED-2) entlang einer Linie angeordnet sind oder in einer zwei- oder dreidimen - sionalen Anordnung (AY1, AY2) angeordnet sind.

4. Objektpositions-Detektionsvorrichtung nach einem der Ansprüche 1 bis 3, wobei die mindestens eine Strahlung empfangende Vorrichtung (PD) meh - rere Strahlung empfangende Elemente aufweist.

5. Objektpositions-Detektionsvorrichtung nach einem der Ansprüche 1 bis 4, wobei die mindestens zwei Strahlung emittierenden Elemente jeweils min - destens eine lichtemittierende Vorrichtung (LED-1, LED-2) aufweisen.

6. Objektpositions-Detektionsvorrichtung nach einem der Ansprüche 1 bis 5, wobei die mindestens eine Strahlung empfangende Vorrichtung mindestens eine Fotodiode (PD) aufweist.

7. Objektpositions-Detektionsvorrichtung nach einem der Ansprüche 1 bis 6, wobei die Detektionsverarbeitungsvorrichtung (PU) eine Position des zu de - tektierenden Objekts (F) in Abhängigkeit von demjenigen Strahlung emittie - renden Element (LED-1, LED-2) bestimmt, dessen Strahlung empfangen wird.

8. Anordnung einer Objektpositions-Detektionsvorrichtung (1) gekoppelt mit einer Kraftfahrzeug-Eingabevorrichtung (HU) mit einer Anzeigeeinheit in ei - nem Fahrzeug, aufweisend
- mindestens eine Strahlung emittierende Vorrichtung (LED) und mindes - tens zwei Strahlung empfangende Elemente (PD-1, PD-2),
- wobei die mindestens zwei Strahlung empfangenden Elemente (PD-1, PD-2) zum Empfangen von Strahlung (L) ausgebildet sind, die von der min - destens einen Strahlung emittierenden Vorrichtung (LED) emittiert wird und von einem zu detektierenden Objekt (F) reflektiert wird,
- eine Detektionsverarbeitungsvorrichtung (PU), die mit den mindestens zwei Strahlung empfangenden Elementen (PD-1, PD-2) gekoppelt ist, wobei die Detektionsverarbeitungsvorrichtung (PU) dazu ausgebildet ist, ein erstes Objektpositions-Detektionssignal (S1) zu erzeugen, wenn Strahlung von der mindestens einen Strahlung emittierenden Vorrichtung (LED) von einer ers - ten Anzahl der Strahlung empfangenden Elemente (PD-1, PD-2) empfan - gen wird, sowie dazu ausgebildet ist, ein zweites Objektpositions-Detekti - onssignal (S2) zu erzeugen, wenn Strahlung von der mindestens einen Strahlung emittierenden Vorrichtung (LED) von einer zweiten Anzahl der Strahlung empfangenden Elemente (PD-1, PD-2) empfangen wird, die ge - ringer ist als die erste Anzahl von Strahlung empfangenden Elementen, **dadurch gekennzeichnet, dass** die Detektionsverarbeitungsvorrichtung (PU) mit der Kraftfahrzeug-Eingabevorrichtung (HU) gekoppelt ist, wobei das ers - te Objektpositions-Detektionssignal (S1) dazu ausgebildet ist, die Kraftfahr - zeug-Eingabevorrichtung (HU) zum Ausführen einer ersten Funktion (TM) zu veranlassen, und das zweite Objektpositions-Detektionssignal (S2) dazu ausgebildet ist, die Kraftfahrzeug-Eingabevorrichtung (HU) zum Ausführen einer zweiten Funktion (SST) zu veranlassen, wobei das erste Objektpositi - ons-Detektionssignal (S1) die Anzeigeeinheit dazu veranlasst, als erste Funktion einen Übergangsmodus (TM) von einem ersten Anzeigebild (IM1) zu einem zweiten Anzeigebild (IM4) mit einem Übergang mit mehreren Bildern dazwischen auszuführen, und wobei das zweite Objektpositions-Detektionssignal (S2) die Anzeigeeinheit dazu veranlasst, als zweite Funkti - on in einem einstufigen Übergangsmodus einen einstufigen Übergang (SST) von einem ersten Anzeigebild (IM1) zu einem zweiten Anzeigebild (IM4) ohne Übergang mit mehreren Bildern dazwischen auszuführen.

9. Objektpositions-Detektionsvorrichtung nach Anspruch 8,
wobei die mindestens eine Strahlung emittierende Vorrichtung (LED) meh - rere Strahlung emittierende Elemente aufweist.

10. Objektpositions-Detektionsvorrichtung nach Anspruch 8 oder 9,
wobei die mindestens zwei Strahlung empfangenden Elemente jeweils min - destens eine Fotodiode (PD-1, PD-2) aufweisen.

11. Objektpositions-Detektionsvorrichtung nach einem der Ansprüche 8 bis 10, wobei die mindestens zwei Strahlung empfangenden Elemente (PD-1, PD-2) derart gesteuert werden, dass sie Strahlung nacheinander empfangen.

12. Objektpositions-Detektionsvorrichtung nach einem der Ansprüche 1 bis 11, wobei das zu detektierende Objekt (F) ein Objekt in Form eines Menschen oder ein von einem Menschen gesteuertes Objekt ist.

13. Objektpositions-Detektionsvorrichtung nach einem der Ansprüche 1 bis 12, wobei die Objektpositions-Detektionsvorrichtung (1, 2) in oder neben einer Haupteinheit (HU) des Fahrzeugs angeordnet ist, die die Kraftfahrzeug-Ein - gabevorrichtung aufweist.

## Revendications

1. Agencement d'un appareil de détection (1) de la position d'un objet couplé à un périphérique d'entrée (HU) destiné à un véhicule automobile possédant une unité d'affichage dans un véhicule, comprenant :
- au moins deux éléments émettant des rayonnements (LED-1, LED-2) et au moins un dispositif de réception de rayonnements (PD) ;
- dans lequel ledit au moins un dispositif de réception de rayonnements (PD) est conçu pour recevoir un rayonnement (L) émis à partir desdits au moins deux éléments émettant des rayonnements (LED-1, LED-2), qui est réfléchi à partir d'un objet (F) qui doit être détecté ;
- un dispositif de traitement de détection (PU) qui est couplé audit au moins un dispositif de réception de rayonnements (PD) ; dans lequel le dispositif de traitement de détection est conçu pour générer un premier signal de détection de la position d'un objet (S1) lorsqu'un rayonnement est reçu qui émane d'un premier nombre d'éléments parmi les éléments émettant des rayonnements (LED-1, LED-2) et est conçu pour générer un deuxième signal de détection de la position d'un objet (S2) lorsqu'un rayonnement est reçu qui émane d'un deuxième nombre d'éléments parmi les éléments émettant des rayonnements (LED-1, LED-2), qui est inférieur au premier nombre d'éléments parmi les éléments émettant des rayonnements ;
**caractérisé en ce que** le dispositif de traitement de détection (PU) est couplé au périphérique d'entrée (HU) destiné à un véhicule automobile ; dans lequel le premier signal de détection de la position d'un objet (S1) est conçu pour faire en sorte que le périphérique d'entrée (HU) pour un véhicule automobile mette en œuvre une première fonction (TM) et le deuxième signal de détection de la position d'un objet (S2) est conçu pour faire en sorte que le périphérique d'entrée (HU) pour un véhicule automobile mette en œuvre une deuxième fonction (SST), le premier signal de détection de la position d'un objet (S1) faisant en sorte que l'unité d'affichage mette en œuvre, à titre de première fonction, un mode de transition (TM) pour passer d'une première image d'affichage (IM1) à une deuxième image d'affichage (IM4) avec une transition comprenant plusieurs images entre les deux, et le deuxième signal de détection de la position d'un objet (S2) faisant en sorte que l'unité d'affichage mette en œuvre, à titre de deuxième fonction, dans un mode de transition en une seule étape, une transition en une seule étape (SST) pour passer d'une première image d'affichage (IM1) à une deuxième image d'affichage (IM4) en l'absence d'une transition comprenant plusieurs images entre les deux.

2. Appareil de détection de la position d'un objet selon la revendication 1, dans lequel lesdits au moins deux éléments émettant des rayonnements (LED-1, LED-2) sont commandés pour émettre des rayonnements de manière séquentielle.

3. Appareil de détection de la position d'un objet selon la revendication 1 ou 2, dans lequel lesdits au moins deux éléments émettant des rayonnements (LED-1, LED-2) sont disposés de manière à s'étendre le long d'une ligne ou sont disposés sous la forme d'une matrice en deux dimensions ou entre trois dimensions (AY1, AY2).

4. Appareil de détection de la position d'un objet selon l'une quelconque des revendications 1 à 3, dans lequel ledit au moins un dispositif de réception de rayonnements (PD) comprend plusieurs éléments de réception de rayonnements.

5. Appareil de détection de la position d'un objet selon l'une quelconque des revendications 1 à 4, dans lequel lesdits au moins deux éléments émettant des rayonnements comprennent chacun au moins un dispositif d'émission de la lumière (LED-1, LED-2).

6. Appareil de détection de la position d'un objet selon l'une quelconque des revendications 1 à 5, dans lequel au moins un dispositif de réception de rayonnements comprend au moins une photodiode (PD).

7. Appareil de détection de la position d'un objet selon l'une quelconque des revendications 1 à 6, dans lequel le dispositif de traitement de détection (PU) détermine une position de l'objet (F) qui doit être détecté, en fonction de l'élément émettant des rayonnements (LED-1, LED-2) dont le rayonnement est reçu.

8. Agencement d'un appareil de détection (2) de la position d'un objet couplé à un périphérique d'entrée (HU) pour un véhicule automobile possédant une unité d'affichage dans un véhicule, comprenant :
- au moins un dispositif émettant des rayonnements (LED) et au moins deux éléments de réception de rayonnements (PD-1, PD-2) ;
- dans lequel lesdits au moins deux éléments de réception de rayonnements (PD-1, PD-2) sont conçus pour recevoir un rayonnement (L) émis à partir dudit moins un dispositif émettant des rayonnements (LED), qui est réfléchi à partir d'un objet (F) qui doit être détecté ;
- un dispositif de traitement de détection (PU) qui est couplé auxdits au moins deux éléments de réception de rayonnements (PD-1, PD-2) ; dans lequel le dispositif de traitement de détection (PU) est conçu pour générer un premier signal de détection de la position d'un objet (S1) lorsqu'un rayonnement qui émane dudit au moins un dispositif émettant des rayonnements (LED) est reçu par un premier nombre d'éléments parmi les éléments de réception de rayonnements (PD-1, PD-2) et est conçu pour générer un deuxième signal de détection de la position d'un objet (S2) lorsqu'un rayonnement qui émane dudit au moins un élément émettant des rayonnements (LED) est reçu par un deuxième nombre d'éléments parmi les éléments de réception de rayonnements (PD-1, PD-2), qui est inférieur au premier nombre d'éléments parmi les éléments de réception de rayonnements ;
**caractérisé en ce que** le dispositif de traitement de détection (PU) est couplé au périphérique d'entrée (HU) pour un véhicule automobile ; dans lequel le premier signal de détection de la position d'un objet (S1) est conçu pour faire en sorte que le périphérique d'entrée (HU) pour un véhicule automobile mette en œuvre une première fonction (TM) et le deuxième signal de détection de la position d'un objet (S2) est conçu pour faire en sorte que le périphérique d'entrée (HU) pour un véhicule automobile mette en œuvre une deuxième fonction (SST), le premier signal de détection de la position d'un objet (S1) faisant en sorte que l'unité d'affichage mette en œuvre, à titre de première fonction, un mode de transition (TM) pour passer d'une première image d'affichage (IM1) à une deuxième image d'affichage (IM4) avec une transition comprenant plusieurs images entre les deux, et le deuxième signal de détection de la position d'un objet (S2) faisant en sorte que l'unité d'affichage mette en œuvre, à titre de deuxième fonction, dans un mode de transition en une seule étape, une transition en une seule étape (SST) pour passer d'une première image d'affichage (IM1) à une deuxième image d'affichage (IM4) en l'absence d'une transition comprenant plusieurs images entre les deux.

9. Appareil de détection de la position d'un objet selon selon la revendication 8, dans lequel ledit au moins un dispositif d'émission de rayonnements (LED) comprend plusieurs éléments d'émission de rayonnements.

10. Appareil de détection de la position d'un objet selon selon la revendication 8 ou 9, dans lequel lesdits au moins deux éléments de réception de rayonnements comprennent chacun au moins une photodiode (PD-1, PD-2).

11. Appareil de détection de la position d'un objet selon l'une quelconque des revendications 8 à 10, dans lequel lesdits au moins deux éléments de réception de rayonnements (PD-1, PD-2) sont réglés pour recevoir un rayonnement de manière séquentielle.

12. Appareil de détection de la position d'un objet selon l'une quelconque des revendications 1 à 11, dans lequel l'objet (F) qui doit être détecté représente un objet d'un être humain ou un objet commandé par un être humain.

13. Appareil de détection de la position d'un objet selon l'une quelconque des revendications 1 à 12, dans lequel l'appareil (1, 2) de détection de la position d'un objet est disposé dans un autoradio (HU) du véhicule qui comprend le périphérique d'entrée pour un véhicule automobile ou qui est disposé en position adjacente à l'autoradio en question.
